# EUROPEAN PATENT APPLICATION

(11) **EP 0 765 021 A1**
(43) Date of publication of application: **26.03.1997**
(21) Application number: 96114818.6
(22) Date of filing: 16.09.1996
(51) Int. Cl.: H02J 7/14, H02M 3/158

(54) **A voltage regulator device for an alternator having permanent magnets**

(30) Priority: 19.09.1995 IT TO950740
(71) Applicant: MAGNETI MARELLI S.p.A., 20145 Milano (IT)
(72) Inventor: Nepote, Andrea, 10131 Torino (IT); Copertino, Dario, 10152 Torino (IT)
(74) Representative: Quinterno, Giuseppe

(57) **Abstract**

The regulator device is provided for an alternator (A) to which is connected a rectifier circuit (PD) which converts the voltage produced by the alternator (A) into a rectified voltage (Vin). It includes a plurality of switching convertor circuits (S1, S2, S3, S4) operating out of phase from one another to convert the rectified voltage (Vin) into a stabilised DC voltage (Vout) of lower value.

## Description

The present invention relates to a voltage regulator device intended to be associated with an alternator having permanent magnets. More specifically the present invention relates to a voltage regulator device intended to be associated with an alternator driven by the heat engine of a vehicle, in particular a motor vehicle.

As is known, motor vehicles driven by a heat engine are provided with an alternator driven by the heat engine and having the function of producing electrical energy intended to supply the electrical appliances installed on board the motor vehicle as well as to keep an accumulator battery charged, which is also installed on board the motor vehicle. As is known, the voltage produced by the alternator is very variable because of the variations in the speed of rotation of the heat engine which drives the alternator itself. It is therefore necessary to use a voltage regulator device acting to stabilise the voltage produced by the alternator to a predetermined value in such a way as to render it compatible with the voltage of the motor vehicle's electrical equipment (typically 12 volts).

The majority of alternators used until now on motor vehicles are of the so-called excitation winding type.

This type of alternator allows regulation of the voltage generated to be effected in a rather simple manner. It is in fact sufficient to control the current which flows in the excitation winding to control the voltage produced by the alternator. With this type of alternator it is therefore possible to use a relatively simple and economic voltage regulator device in that it need only control the excitation current.

Moreover this excitation current does not normally assume high values (in the typical case of an alternator for a motor car the excitation current is of the order of 5 amperes) in contrast with the current generated by the alternator itself which is significantly greater (in the same case the voltage generated by the alternator is typically of the order of 50 amperes). Since the voltage regulator device does not have to handle a high current it typically does not have any heat dissipation problems and it is not necessary to use electronic power components.

This system, which is widely known and utilised in the art, nevertheless has disadvantages. One disadvantage is due to the type of alternator utilised, in fact excitation winding alternators are less efficient and bigger than permanent magnet alternators.

In a permanent magnet alternator, however, there is no excitation field winding and therefore it is not possible to regulate the output voltage by acting on the low power excitation current. The only practical system for regulating the output voltage is to introduce an AC-DC voltage converter circuit between the alternator and the motor vehicle's electrical equipment. Typically such voltage converter circuit is a commutation (or switching) circuit. Since the alternator is dimensioned in such a way that in normal operation it generates voltages somewhat greater than the nominal voltage of the motor vehicle's electrical equipment step-down converters are naturally used.

This solution, although it achieves the desired objective, has some disadvantages. A first disadvantage is due to the necessity to provide a low cost reliable converter which contrasts with the need to be able to handle high currents which typically require the use of several semiconductor elements (for example FET transistors) in parallel. Moreover, since the output voltage from the switching converter has a decidedly pulse-type wave form (typically it is a square wave) a filtering capacitor having a high capacity is necessary.

The object of the present invention is that of providing a voltage regulator device able to overcome the above-mentioned disadvantages.

According to the present invention, this object is achieved by a voltage regulator device having the characteristics set out in a specific manner in the following claims.

The invention will now be described purely by way of non-limitative example, with reference to the accompanying drawings, in which:
Figure 1 is a block-schematic representation of one embodiment of the voltage regulator device according to the present invention;
Figures 2 and 3 are schematic circuit diagrams of two alternative embodiments of a portion of the voltage regulator device of the invention;
Figures 4 and 5 are two block schematic diagrams illustrating the operation of two alternative embodiments of the voltage regulator device according to the invention;
Figure 6 is a Cartesian diagram illustrating the operation of the embodiment of Figure 5;
Figures 7 and 8 are two schematic circuit diagrams of two further alternative embodiments of a portion of the voltage regulator device according to the invention; and
Figure 9 is a schematic representation of a component used in the embodiment of Figure 8.

The regulator device according to the present invention envisages the use of several, for example four, step-down converters in parallel. Each of the converters, moreover, operates out of phase with respect to the others. In this way the frequency seen by the filtering capacitor both at input and output is multiplied by the number of parallel converter stages with enormous advantages from the point of view of the dimensioning of the capacitor itself. Moreover the use of several converters increases the reliability of the system in that it can have a degree of redundancy and, that is to say, can continue to operate even if one or more of the converters fails. For this purpose each converter stage can be provided with its own separate fuse in such a way as to guarantee that it is automatically disconnected in the case of a failure.

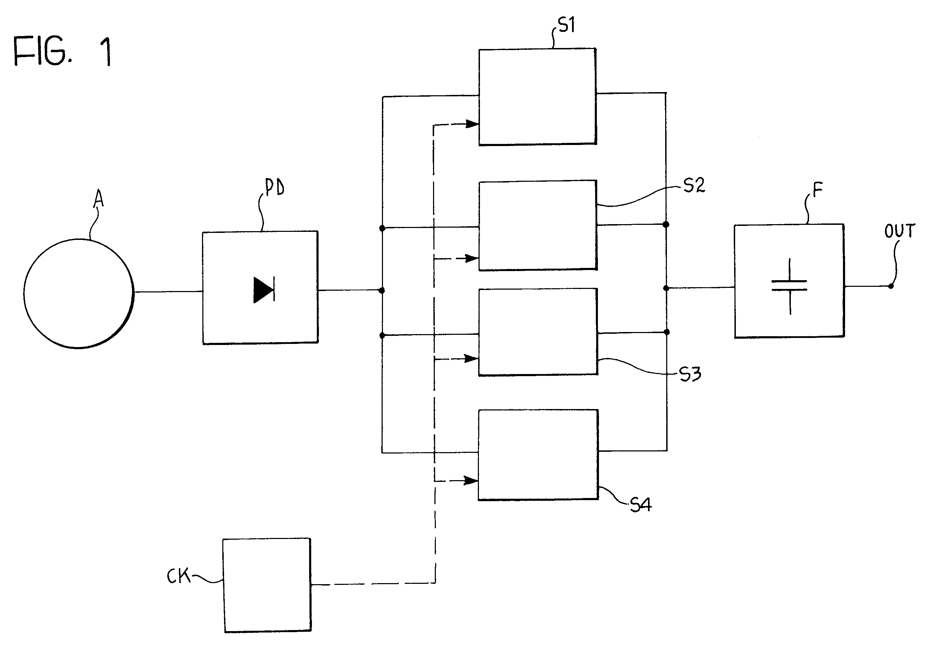

For a better understanding there is shown in Figure 1 a block diagram of the voltage regulator device according to the invention. As can be seen, the alternator with which the regulation device is associated is indicated A. The alternator A is connected in a conventional manner to a rectifier bridge PD operable to rectify the alternating voltage produced by the alternator A.

The rectifier bridge PD is followed by one or more filtering capacitors (not specifically illustrated) necessary at the input of the switching converters. The output of the rectifier bridge PD is moreover connected, as anticipated, to the inputs of four step-down converters S1, S2, S3 and S4. The outputs of the four converters S1, S2, S3 and S4 are connected to one or more filtering capacitors F which are common to all the converters.

At the output OUT of the filtering capacitors F there is available a stabilised and rectified voltage adapted to the electrical equipment. The output OUT can therefore be connected, for example, to the motor vehicle battery. In Figure 1 there is, moreover, illustrated a control circuit CK connected to the four converters S1, S2, S3 and S4. As previously mentioned, in order to minimise the dimensions of the filtering capacitors F it is necessary that the converters be out of phase in such a way as to maximise the frequency of the output voltage. It is therefore necessary to use a control circuit which performs this function, for example the control circuit CK which provides four regularly phase displaced timing signals (therefore at 90°) to the four converters S1, S2, S3 and S4. The control circuit CK may eventually generate these timing signals at a fixed frequency. The control circuit CK can moreover also include the electronic control circuitry of the four converters S1, S2, S3 and S4.

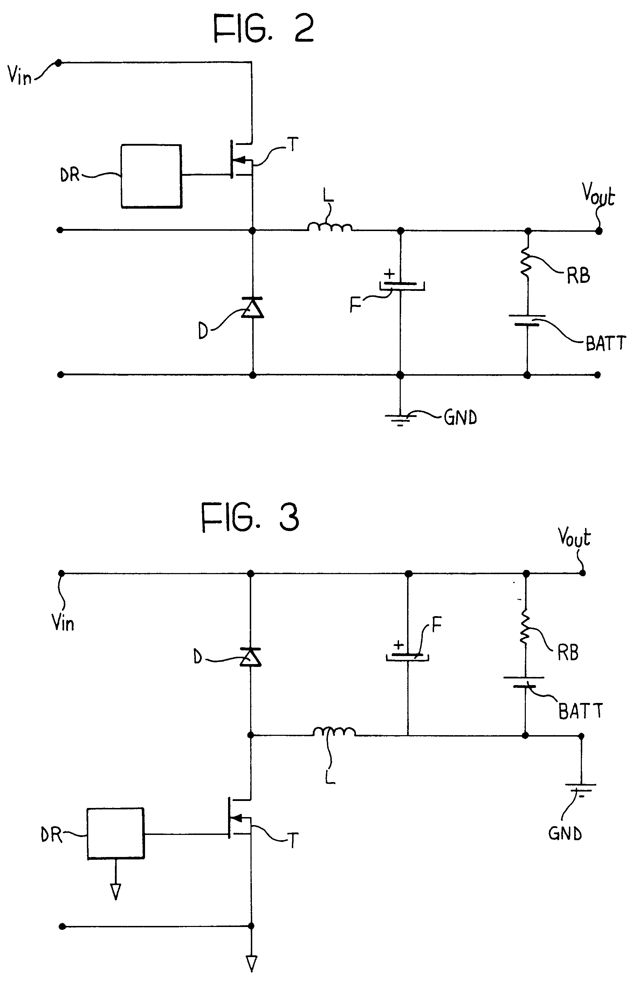

In Figure 2 there is shown a possible circuit configuration of one of the four converters S1, S2, S3 and S4 which can advantageously be identical. As can be seen in Figure 2, there is shown a classic step-down converter circuit configuration operable to convert an input voltage Vin of variable value into a stabilised output voltage Vout of lower value. The step-down converter naturally includes a semiconductor switching element, typically a MOSFET transistor controlled by a driving circuit DR, an inductor L and a recirculation diode D. In the circuit there are also shown filtering capacitors F, the vehicle battery BATT, with its characteristic resistance RB shown separately, and ground GND. Naturally, the filtering capacitors F, and with greater reason the battery BATT, RB, are common to all the converters S1, S2, S3 and S4. The driving circuit DR, if it is integrated into the control circuit CK, can also be common to all the converters S1, S2, S3 and S4, in which case it will naturally have four outputs rather than one.

Each converter utilises a single transistor T and handles only a fraction of the current generated by the alternator A. The transistor T can therefore, for example, be a MOSFET having a low gate load with consequent simplification of the driving circuit DR and reduction in the switching losses.

In Figure 3 there is shown an alternative embodiment of the circuit configuration illustrated in Figure 2. The configuration of Figure 3 includes the same circuit elements as the configuration of Figure 2. However the configuration of Figure 3 allows several advantages to be achieved. The particular structure used, with a direct connection between the positive pole Vin of the rectifier bridge PD and the positive pole of the battery BATT allows equipotentiality of the centralised control circuitry CK and of the driving circuit DR of the individual converters. This makes it possible to avoid the use of a whole series of otherwise necessary components such as photo-couplers, driving transformers, supply voltages of floating type or additional initialisation or boot strap circuits.

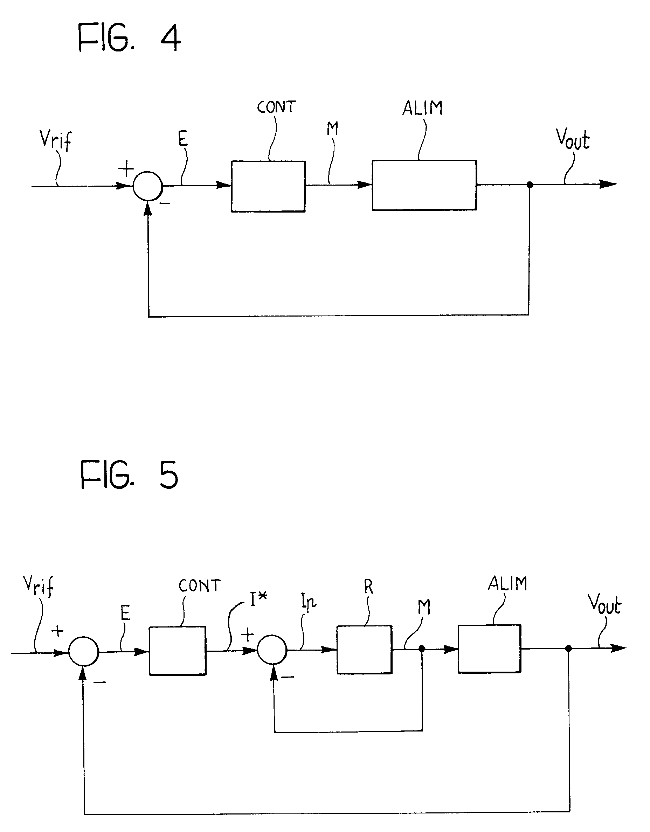

The driving circuit DR naturally operates with a closed loop control strategy. In Figure 4 there is shown for example a block diagram illustrating a closed loop voltage control strategy usable in the driving circuit DR. This strategy, widely known in the art, provides for the comparison of the output voltage Vout with a reference voltage Vrif to produce an error signal E. The error signal E is processed by a control module CONT which generates a control signal M. The control signal M is that which effectively controls the operation of the converter circuitry indicated here by means of the block ALIM, which produces the output voltage Vout.

This strategy, however, has the disadvantage of not allowing an optimum control of the output voltage Vout.

In the case of voltage control the block ALIM in fact has a transfer function having two complex poles. This means that the control is more difficult to stabilise. In practice, in order to obtain stability it is necessary to increase the time constant of the control system with the result that the control system becomes slow and therefore reacts late to variations in operating conditions.

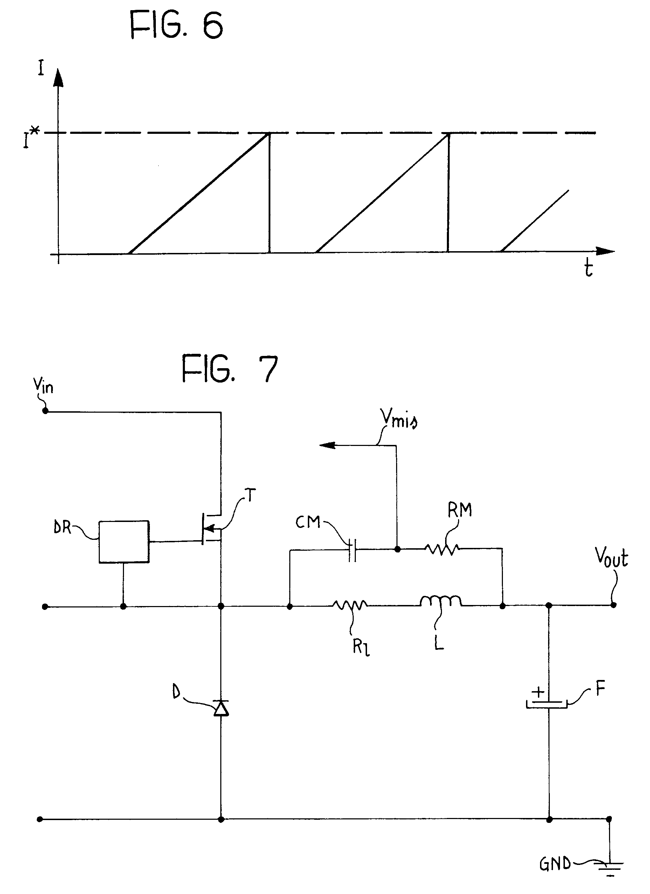

Better results can be obtained by utilising a closed loop current control strategy. A block diagram illustrating this strategy is shown in Figure 5. This arrangement is also widely known in the art. As can be seen, in this case the control module CONT emits an output signal indicative of a reference current I*. The current I* is in practice utilised as a threshold value to regulate the average current in the inductor L of one of the converters. In this way the inductor L becomes in practice a current generator. The current I* is then compared by means of an internal control loop with a signal M indicative of the current flowing in the inductor L. This signal M is obtained, for example, by means of a resistive sensor R (typically called a shunt). In this way a signal indicative of the current Ip desired in the inductor L is generated. The signal M is therefore the control signal which is sent to the converter circuitry ALIM which generates the voltage Vout at its output. In Figure 6 there is illustrated, by way of example, the variation of the current Ip in the inductor L. As can be seen the current Ip is controlled in such a way as not to exceed a threshold value I*.

By utilising this strategy the control becomes very simple in that the transfer function of the converter circuitry ALIM has a single pole. This makes it possible to obtain a control with a very fast response and therefore optimum performances.

Moreover, since in practice the current in the inductor L is controlled, during the period in which the transistor T is in conduction, the current which flows in the inductor L is equal to the current which flows in the transistor T. It is therefore possible to use a device of the SENSEFET type as the transistor T in place of a normal MOSFET. SENSEFET devices are in practice transistors having an additional output terminal from which can be taken a signal indicative of the current which flows through the SENSEFET device itself. It is therefore possible to avoid the use of a shunt resistor, which is expensive and difficult to use, to measure the current through the inductor L.

In practice, with this control strategy each inductor L of each converter stage is controlled as a separate current generator so that balancing of the current between the various converter stages is ensured. There is, therefore, no risk of current overload on one of the converter stages and protection against current overloads is therefore intrinsic.

Normally, in the case of a conventional type of (switching) converter regulation device the filtering capacitor, typically an electrolytic condenser, is not internal within the device but is positioned close to the battery BATT which acts just as an electrolytic capacitor but with high internal resistance. In the regulation device according to the invention on the other hand the filtering capacitor F is in practice internal within the device itself thanks to the fact that its dimensions are contained because the control, utilising the current control strategy, is of fast type.

Moreover, the frequency is very high since the operating frequency of each converter stage must be multiplied by the number of stages. In a presently preferred embodiment the operating frequency of each individual converter stage is 125 kHz such that the overall frequency seen by the filtering capacitor F is 500 kHz. This ensures that the output terminal of the voltage regulator device of the invention can be utilised as a low impedance terminal in place of the terminal of the battery BATT conventionally utilised for this purpose, which can be conveniently connected to all the electrical loads of the motor vehicle. The battery, having a greater impedance, can act as a remote backup. The battery can therefore be smaller. In particular, whenever the output voltage of the alternator is greater than the required supply voltage and non-electric starting of the heat engine can be achieved, the battery can be eliminated entirely. In this case, in order to ensure, upon starting of the heat engine, supply of the voltage to the control circuits of the regulator device, there can be provided a linear regulator device (of type known per se) functioning as a starter.

In Figure 7 there is illustrated an alternative embodiment, referred to the circuit shown in Figure 2, for the case that it is desired to effect a detection of the current flowing through the inductor L without using a transistor T of the SENSEFET type. As can be seen in the circuit of Figure 7 the inductor L has been represented by showing its resistance Rl separately. The idea on which this variant embodiment is based consists in utilising the inductor L as the measurement shunt. Naturally it is not possible directly to utilise the resistance Rl as a shunt in that it is in reality distributed throughout the entirety of the inductor L and is therefore inseparable from it. To effect the measurement it is however sufficient to introduce in parallel to the inductor L a measurement resistor RM and capacitor CM. Since the inductor L has a transfer function presenting a zero this can be cancelled by means of a network having a transfer function with a pole.

This network comprises simply the measurement capacitor CM.

In this way it is possible to take off a voltage signal Vmis at the common node between the measurement capacitor CM and the measurement resistor RM indicative of the current flowing through the inductor L. In this way it is possible to avoid the use of a shunt resistor to effect measurement of the current, as well as a transistor T of the SENSEFET type. Moreover the reading of the voltage Vmis indicative of the current, is of integral type in that it is achieved by means of the capacitor CM and therefore already filtered of possible disturbances.

This variant of embodiment cannot be conveniently utilised in the configuration illustrated in Figure 3 since in this case the ground is different from the ground GND of the vehicle. In the case of the configuration of Figure 3 it is therefore in practice necessary to utilise the signal generated by a transistor T of SENSEFET type, possibly filtered, or else a measurement shunt.

In the case of switching convertors of the type utilised in the present invention there is typically envisaged the use of a circuit for damping voltage fronts. This damping circuit commonly known as a SNUBBER, substantially has two functions. It reduces the electromagnetic emissions from the switching convertor which are the possible cause of interference and disturbances, and moreover protects the transistor T of MOSFET or SENSEFET type from excessively high voltage transients.

In fact transistors made in MOSFET technology cannot support a voltage variation which is too high in time unit. This typically makes necessary the use of a damper or SNUBBER circuit for the purpose of safe-guarding the MOSFET transistor. This SNUBBER circuit can be made by connecting a capacitor, having sufficient capacity, at the point in the circuit in which it is desired to effect the voltage damping. The capacitor must however be discharged, otherwise once charged it becomes ineffective, which in the simplest case can be achieved by means of a resistor. This system, however, is of low efficiency in that the resistor intended to discharge the SNUBBER capacitor must dissipate a considerable quantity of energy and therefore heat.

For these reasons SNUBBER circuits of the so-called lossless type are preferred. Such circuits utilise inductors and additional diodes to discharge the damping capacitor.

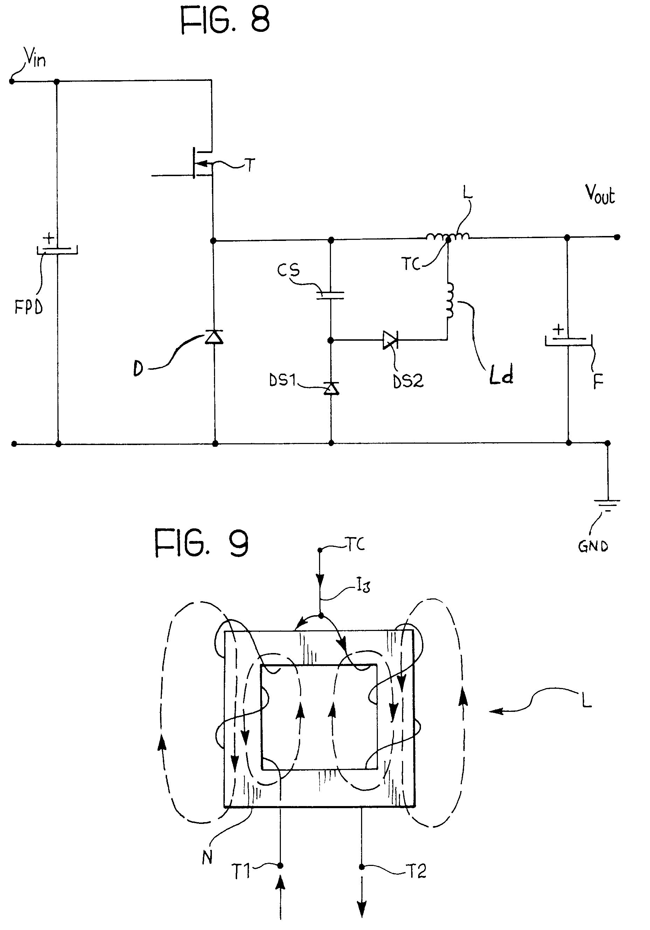

In Figure 8 there is shown, by way of example, a constructional variant, again referred to the circuit represented in Figure 2, using a SNUBBER circuit of the lossless type. This SNUBBER circuit shown in Figure 8, can however be used in an entirely analogous manner also in the case of the circuit configuration of Figure 3.

As can be seen, the lossless SNUBBER circuit utilises a damping capacitor CS connected to the common node between the inductor L and the transistor T. To discharge the damping capacitor CS there are provided an additional inductor Ld and two additional diodes DS1 and DS2. As can be seen, the additional inductor Ld is connected to a central tap of the inductor L of the convertor stage. This SNUBBER circuit operates correctly and does not present the problem of introducing losses and the need for dissipation of heat.

It does, however, have a disadvantage due to the fact that the additional inductor Ld must have a high value so that it has considerable size and cost.

In practice, by utilising the topology represented in Figure 8, the additional inductor Ld can in fact be achieved by utilising the homopolar inductance of the centrally tapped inductor L. In the circuit according to the invention the cathode of the diode DS2 is therefore in reality connected directly to the central tap of the inductor L. The additional inductor Ld of the SNUBBER circuit is therefore formed by the homopolar inductance, that is to say towards any one of the two branches of the centrally tapped inductor L.

For a better understanding, in Figure 9 there is schematically shown the inductor L provided with a central tap TC. As can be seen, during normal operation the inductor L behaves in a conventional manner with the inductor current entering and leaving from the two end terminals T1 and T2 respectively, with the magnetic flux which normally flows within the core N. When on the other hand discharge of the SNUBBER capacitor CS takes place there is a discharge current Is entering from the central terminal TC of the inductor L.

As can be seen, this discharge current Is "sees" in practice two inductors constituted by the two branches of the inductor L. In these two inductors the magnetic flux partially closes in air as indicated by the broken lines in Figure 9. Tests conducted by the Applicant have made it possible to determine that the homopolar inductance, given by the two inductors constituted by the two branches of the inductor L with the central tap TC has a value entirely adequate to permit the correct operation of the SNUBBER circuit having the topology represented in Figure 8.

In this way it is possible to form an efficient SNUBBER circuit of extremely low cost and size in that no additional inductor is necessary.

It is moreover evident from the description that the regulator device according to the invention can include a number of parallel convertor stages different from four.

Naturally, the principle of the invention remaining the same, the details of construction and the embodiments can be widely varied with respect to what has been described and illustrated, without by this departing from the ambit of the present invention.

## Claims

1. A voltage regulator device for an alternator (A) to which is connected a rectifier circuit (PD) which converts the alternating voltage produced by the alternator (A) into a rectified voltage (Vin); the voltage regulator device including a switching convertor device operable to convert the said rectified voltage (Vin) into a DC voltage (Vout) of lower value;
characterised in that the said switching convertor device includes a plurality of switching convertor circuits (S1, S2, S3, S4) operating out of phase from one another.

2. A device according to Claim 1, characterised in that the said switching convertor circuits (S1, S2, S3, S4) are identical to one another.

3. A device according to Claim 1 or Claim 2, characterised in that the said switching convertor circuits (S1, S2, S3, S4) are phase displaced in a regular manner from one another.

4. A device according to any of Claims 1 to 3, characterised in that the said switching convertor circuits (S1, S2, S3, S4) are of the step-down type.

5. A device according to any preceding claim, characterised in that each convertor circuit (S1, S2, S3, S4) includes a pair of input terminals intended to be connected to the output terminals of the rectifier circuit (PD) and a pair of output terminals intended to be connected to the electrical user device; the higher potential input terminal being directly connected to the higher potential output terminal.

6. A device according to Claim 5, characterised in that each convertor circuit includes a MOSFET transistor (T) the gate of which is connected to the output of a driving circuit (DR), the drain of which is connected to the said higher potential input terminal through a recirculation diode (D) and the source of which is connected to the other input terminal;
an inductor (L) connected between the drain of the said transistor (T) and the lower potential output terminal (END); and
a capacitor (F) connected between the output terminals.

7. A device according to any of Claims 1 to 6, characterised in that it includes a control circuit (CK) operable to provide timing signals to the said convertor circuits (S1, S2, S3, S4) for determining the operation of the said convertor circuits (S1, S2, S3, S4) out of phase from one another.

8. A device according to Claim 7, characterised in that the said timing signals have a fixed frequency.

9. A device according to any of Claims 1 to 8, characterised in that it is arranged to perform a closed loop control of the output voltage (Vout).

10. A device according to Claim 9, characterised in that each of the said convertor circuits (S1, S2, S3, S4) is arranged to perform a closed loop control of the current (Ip) flowing through it, internally of the general control loop of the output voltage (Vout).

11. A device according to Claim 10, characterised in that each of the said convertor circuits (S1, S2, S3, S4) controls the current (Ip) flowing through it in such a way that it does not exceed a predetermined threshold (I*).

12. A device according to Claim 10 or Claim 11, characterised in that each of the said convertor circuits (S1, S2, S3, S4) is provided with means for detecting the said current (Ip) flowing through it for effecting control thereof.

13. A device according to Claim 12, characterised in that the said means for detecting the said current (Ip) comprise a shunt resistor.

14. A device according to Claim 12, characterised in that the said means for detecting the said current (Ip) comprise a measurement capacitor (CM) and a measurement resistor (RM) connected in series with one another, in parallel to an inductor (L) of the said switching voltage convertor circuit and dimensioned in such a way as to generate, at the common terminal between the said measurement capacitor (CM) and the said measurement resistor (RM) a voltage signal (Vmis) indicative of the current (Ip) flowing in the said convertor circuit.

15. A device according to Claim 12, in which each of the said convertor circuits (S1, S2, S3, S4) include at least one transistor (T) of MOSFET type for the purpose of controlling the said current (Ip) flowing in the said convertor circuit, characterised in that the said transistor (T) is a transistor of SENSEFET type operable to generate a signal indicative of the said current (Ip).

16. A device according to any of Claims 1 to 15, characterised in that each of the said convertor circuits (S1, S2, S3, S4) is provided with its own protection fuse.

17. A device according to any of Claims 1 to 16, characterised in that it includes input (FPD) and output (F) filtering capacitors in common for the said plurality of convertor circuits (S1, S2, S3, S4).

18. A device according to any of Claims 1 to 17, characterised in that each of the said convertor circuits (S1, S2, S3, S4) includes a damper circuit (CS, DS1, DS2, Ld) operable to damp fast voltage transients in the said convertor circuit.

19. A device according to Claim 18, characterised in that the said damper circuit (CS, DS1, DS2) employs, as additional inductance (Ld) the homopolar inductance of an inductor (L) of the said convertor circuit.

20. A device according to Claim 19, characterised in that the said homopolar inductance is utilised by means of the connection of the said damper circuit (CS, DS1, DS2) to a central tap (TC) of the said inductor (L) of the said convertor circuit.

21. A device according to any of Claims 1 to 21, characterised in that there are four said convertor circuits (S1, S2, S3, S4).

22. A voltage regulator device according to any preceding claim, characterised in that for use on a vehicle the electrical system of which has no battery it includes means operable to allow the electrical supply of the control circuits of the regulator device in the starting phase of the motor vehicle engine.
